# EUROPEAN PATENT APPLICATION

(11) **EP 4 685 446 A1**
(43) Date of publication of application: **28.01.2026**
(21) Application number: 24190473.9
(22) Date of filing: 23.07.2024
(51) Int. Cl.: G01K 3/00

(54) **METERING APPARATUS**

(71) Applicant: Landis+Gyr GmbH, 90459 Nürnberg (DE)
(72) Inventor: STUREK, Robert, 90459 Nürnberg (DE); BÄR, Siegfried, 90459 Nürnberg (DE)
(74) Representative: Marks & Clerk LLP

(57) **Abstract**

A method of operating a metering apparatus, the method comprising determining an internal temperature of the metering apparatus and operating the metering apparatus based on the internal temperature.

## Description

### FIELD

The present disclosure relates a metering apparatus and a method of operating the metering apparatus.

### BACKGROUND

For a known metering apparatus, such as a utility meter, a range of an ambient temperature may be specified for operation of the metering apparatus. For example, the range of the ambient temperature may be between 5°C and 55°C. An average ambient temperature for operation of the metering apparatus may be specified as about 33.5 °C. In the specified temperature range, the operation of the metering apparatus may remain unchanged. When estimating a service-life or duration of use of the metering apparatus, the limits of the range of the ambient temperature are considered as the worst case and the average ambient temperature is used as a typical temperature value. An aim of at least one embodiment of at least one aspect of the present disclosure may be to increase a service-life or duration of use of a metering apparatus.

### SUMMARY

According to a first aspect of the present disclosure there is provided a method of operating a metering apparatus, the method comprising determining an internal temperature of the metering apparatus and operating the metering apparatus based on the internal temperature.

The internal temperature of the metering apparatus may be different from an ambient temperature of the metering apparatus. For example, at one or more points in a day, the internal temperature of the metering apparatus may be increased relative to the ambient temperature of the metering apparatus. One or more properties of the metering apparatus may depend on the internal temperature. For example, the one or more properties of the metering apparatus may comprise a power or current consumption of the metering apparatus, a storage device discharge, e.g. a battery discharge, and/or an amount of electrical energy supplied by the storage device, e.g. to another device of the metering apparatus. A high internal temperature of the metering apparatus may lead to an increased power or current consumption of the metering apparatus and/or an increased discharge of the storage device. A low internal temperature of the metering apparatus may impact a performance of the storage device. For example, at a low internal temperature of the metering apparatus, the supply of electrical energy of the storage device, e.g. to the other device of the metering apparatus, may be insufficient for the operation of the metering apparatus. Additionally or alternatively, the operation of the metering apparatus may require a high amount of electrical energy to be supplied by the storage device, e.g. to the other device of the metering apparatus. By operating the metering apparatus based on the determined internal temperature, the operation of the metering apparatus may be performed at an internal temperature, which may be optimal for the storage device and/or at which a power or current consumption of the metering apparatus may be reduced. This in turn may result in an increased service-life or duration of use of the metering apparatus.

The metering apparatus may comprise the storage device. The internal temperature may be or comprise a temperature at the storage device. Alternatively, the internal temperature may be or comprise a temperature proximal to the storage device.

Operating the metering apparatus based on the internal temperature may comprise at least one of: operating the metering apparatus based on a comparison of the internal temperature with at least one or both of a first threshold and a second threshold, operating the metering apparatus based on a comparison of the internal temperature with an optimal temperature, operating the metering apparatus based on a profile of the internal temperature, and/or operating the metering apparatus based on a change of the internal temperature, e.g. relative to one or more previously determined internal temperatures of the metering apparatus.

The method may comprise determining whether the internal temperature of the metering apparatus is above the first threshold and below the second threshold. In response to determining that the internal temperature of the metering apparatus is above the first threshold and below the second threshold, the method may comprise operating the metering apparatus.

Operating the metering apparatus may comprise transmitting data and/or receiving data. For example, the metering apparatus may comprise a transmission device configured to transmit data and/or to receive data. The transmission device may be connectable, e.g. electrically connectable, to the storage device. For example, the metering apparatus may be configured such that, when the metering apparatus is operated, the transmission device is supplied with electrical energy by the storage device. Above the first threshold, the storage device may supply the transmission device with sufficient electrical energy for transmitting data and/or receiving data. Below the second threshold, a power or current consumption of the metering apparatus, e.g. the transmission device, may be lower than a power or current consumption of the metering apparatus, e.g. the transmission device, at an internal temperature above the second threshold. Additionally or alternatively, below the second threshold, a discharge of the storage device may be lower than a discharge of the storage device at an internal temperature above the second threshold. By operating the metering apparatus based on the comparison between the first and/or second thresholds, a service-life or duration of use of the metering apparatus, e.g. the storage device, may be increased and/or an operation of the metering apparatus may be improved.

In response to determining that the internal temperature is below the first threshold or above the second threshold, the method may comprise operating the metering apparatus at a predetermined time, e.g. a predetermined point in time. This may ensure that data is transmitted and/or received by the metering apparatus.

The internal temperature of the metering apparatus may be a current internal temperature. The method may comprise determining the change of the current internal temperature relative to the one or more previously determined internal temperatures of the metering apparatus, e.g. in response to determining that the current internal temperature of the metering apparatus is above the first threshold and below the second threshold. The term "change" may be considered as encompassing the term "deviation" or "variation".

The method may comprise determining whether a difference between an internal temperature expected at a later point in time and an optimal temperature decreases, e.g. relative to a difference between the current internal temperature and the optimal temperature, e.g. based on the change of the current internal temperature.

The method may comprise determining whether the difference between the internal temperature expected at the later point in time and the optimal temperature is or becomes zero, e.g. based on the change of the current internal temperature. In response to a determination that the difference between the internal temperature expected at the later point in time and the optimal temperature decreases, e.g. relative to the difference between the current internal temperature and the optimal temperature, the method may comprise operating the metering apparatus at the later point in time. In response to a determination that that the difference between the internal temperature expected at the later point in time and the optimal temperature equals zero, the method may comprise operating the metering apparatus at the later point in time. This may allow operation of the metering apparatus at an internal temperature close or equal to the optimal temperature. The optimal temperature may be understood as an internal temperature of the metering apparatus at which the power or current consumption of the metering apparatus, the storage device discharge and/or the amount of electrical energy supplied by the storage device may lead to an increased and/or optimal service-life or duration of use and/or performance of the metering apparatus.

In response to a determination that the difference between the internal temperature expected at the later point in time and the optimal temperature increases, e.g. relative to the difference between the current internal temperature and the optimal temperature, the method may comprise operating the metering apparatus at a point in time before: an expected internal temperature of the metering apparatus exceeds the second threshold, the expected internal temperature of the metering apparatus decreases below the first threshold, and/or the difference between the expected internal temperature and the optimal temperature increases. This may ensure that the metering apparatus is operated while the internal temperature is above the first threshold, below the second threshold and/or close to or at the optimal temperature.

The method may comprise determining the internal temperature of the metering apparatus a number of times in a temperature determination interval. The method may comprise determining the profile of the internal temperature of the metering apparatus, e.g. based on a number of internal temperatures determined in the temperature determination interval. The method may comprise determining the internal temperature of the metering apparatus a number of times in each of a plurality of temperature determination intervals. The method may comprise determining the profile of the internal temperature of the metering apparatus based on the internal temperatures determined in each of the plurality of temperature determination intervals. The profile of the internal temperature of the metering apparatus may comprise a plurality of internal temperatures. Each of the plurality of internal temperatures may be based on a plurality of internal temperature values. The plurality of internal temperature values may have been determined at a same time in respective temperature determination intervals of the plurality of temperature determination intervals. Each of the plurality of internal temperatures may be a result of a function applied to the plurality of internal temperature values.

The method may comprise operating the metering apparatus based on the profile of the internal temperature of the metering apparatus. By operating the metering apparatus based on the profile of the internal temperature of the metering apparatus, the operation of the apparatus may be performed at one or more internal temperatures, which may be optimal for the storage device and/or at which a power or current consumption of the metering apparatus may be reduced. This in turn may result in an increased service-life or duration of use of the metering apparatus.

Operating the metering apparatus based on the profile of the internal temperature of the metering apparatus may comprise determining a point in time, e.g. in an operational time window of the metering apparatus, e.g. at which an internal temperature of the metering apparatus is above the first threshold and below the second threshold, e.g. based on the profile of the internal temperature of the metering apparatus. In response to a determination of a point in time, e.g. in the operational time window, at which the internal temperature of the metering apparatus is above the first threshold and below the second threshold, the method may comprise operating the metering apparatus at the determined point in time, e.g. in the operational time window.

In response to a determination that at no point in time, e.g. in the operational time window, the internal temperature of the metering apparatus is above the first threshold and below the second threshold, the method may comprise determining a point in time, e.g. in the operational time window, at which a difference between an internal temperature of the metering apparatus and the first threshold or a difference between an internal temperature of the metering apparatus and the second threshold is minimal, e.g. based on the profile of the internal temperature of the metering apparatus. The method may comprise operating the metering apparatus at the determined point in time, e.g. in the operational time window.

The method may comprise determining a first point in time for operating the metering apparatus. The first point in time may be in an operational time window of the metering apparatus. For example, the first point of time may be at a beginning of the operational time window of the metering apparatus. The operational time window may be a current operational time window. For example, based on the profile of the internal temperature of the metering apparatus, the method may comprise determining whether a difference between an internal temperature and the optimal temperature is smaller at a second point in time, e.g. in the operational time window, relative to a difference between an internal temperature and an optimal temperature at the first point in time. In response to determining that the difference between the internal temperature and the optimal temperature is smaller at the second point in time, the method may comprise operating the metering apparatus at the second point in time. In response to determining that the difference between the internal temperature and the optimal temperature is larger at the second point in time, the method may comprise operating the metering apparatus at the first point in time. This may allow for the metering apparatus to be operated at a point in time, when the internal temperature is equal to or close to the optimal temperature.

According to a second aspect of the present disclosure there is provided a metering apparatus comprising a control device configured to perform the method according to the first aspect.

The metering apparatus may comprise a temperature sensor. The temperature sensor may be configured to perform one or more temperature measurements. The control device may be configured to determine the internal temperature of the metering apparatus, e.g. based on the one or more temperature measurements performed by the temperature sensor.

The above summary is intended to be merely exemplary and non-limiting. The disclosure includes one or more corresponding aspects, embodiments or features in isolation or in various combinations whether or not specifically stated (including claimed) in that combination or in isolation. It should be understood that features defined above in accordance with any aspect of the present disclosure or below relating to any specific embodiment of the disclosure may be utilised, either alone or in combination with any other defined feature, in any other aspect or embodiment or to form a further aspect or embodiment of the disclosure.

### BRIEF DESCRIPTION OF THE DRAWINGS

These and other aspects of the present disclosure will now be described, by way of example only, with reference to the accompanying drawings, wherein:
Figure 1 schematically depicts an exemplary metering apparatus according to an embodiment of the present disclosure;
Figure 2A schematically depicts another exemplary metering apparatus;
Figure 2B schematically depicts another exemplary metering apparatus;
Figure 3 is a flow chart illustrating in overview a method of operating the metering apparatus of Figure 1, 2A or 2B according to an embodiment of the present disclosure;
Figure 4 is a flow chart illustrating in overview one or more further steps that may be part of the method of operating the metering apparatus of Figure 3;
Figure 5 shows an exemplary overview of highest temperatures and early morning temperatures in Alice Springs, Australia, in early spring over 14 days;
Figure 6 depicts a graph of an internal temperature of the metering apparatus of Figure 1, 2A or 2B over time;
Figure 7 is a flow chart illustrating in overview one or more further steps that may be part of the method of operating the metering apparatus of Figure 3 or 4;
Figure 8 is a flow chart illustrating in overview one or more further steps that may be part of the one or more further steps of Figure 7; and
Figure 9 is a flow chart illustrating in overview one or more further steps that may be part of the method of operating the metering apparatus of Figure 3, 4, 7 or 8.

### DETAILED DESCRIPTION OF THE DRAWINGS

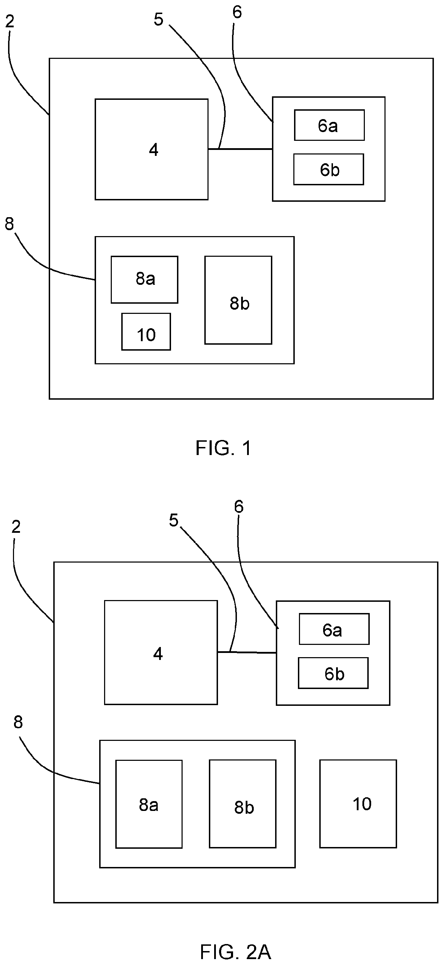

Figure 1 schematically shows an exemplary metering apparatus 2. The apparatus 2 is configured to measure a consumption of a resource, such as thermal energy, gas, water, electricity or the like. The apparatus 2 may be provided in the form of a utility meter. For example, the utility meter may comprise a thermal energy meter, such as a heat meter or a cold meter, a flow rate meter, such as a water meter, a gas meter or the like. The apparatus may also be referred to as a meter, a measuring apparatus, a measuring instrument or a metrological apparatus. It will be appreciated that in other embodiments, the metering apparatus may comprise another electrical device, electrical apparatus or the like.

In this embodiment, the apparatus 2 comprises a storage device 4 for storing electrical energy. The storage device 4 may be provided in the form of a battery, such as a primary battery. The primary battery may comprise a chloride-based battery, such as a a lithium-thionyl chloride (LiSOCl₂) battery or a lithium-manganese dioxide (Li-MnO₂) battery, or any other suitable primary battery.

The apparatus 2 may be connected to another apparatus, such as a server, head-end system, gateway device and/or other metering apparatus, to transmit data to the other apparatus and/or to receive data from the other apparatus. The apparatus 2 may be connected to the other apparatus via a network. The network may comprise a wireless network, such as a low-power wide-area network (LPWAN). For example, the LPWAN may comprise a Narrowband Internet of things (NB-loT) network, MloTy network, Sigfox network or the like. The NB-loT network may use a Long Term Evolution standard. In such embodiments, the network may be referred to as a cellular network.

Alternatively, the network may comprise another wireless network, such as a LoRaWAN (long range or low range wide area network), a Wireless Smart Utility network (Wi-SUN), IEEE 802.15.4g Smart Utility Network (SUN), wireless M-Bus network, or any other suitable wireless network.

The apparatus 2 comprises a transmission device 6. The transmission device 6 is configured to transmit data, e.g. to the other apparatus, via the network. The transmission device 6 is configured to receive data, e.g. from the other apparatus, via the network. The data may include measurement data, control data, one or more messages, one or more signals and/or other data. The transmission device 6 may be configured to convert the data into a radio signal, e.g. to transmit the data to the other apparatus, and/or to convert a radio signal, e.g. received from the other apparatus, into data. The transmission device 6 may comprise a communications device 6a, such as a modem, and an antenna 6b.

The storage device 4 is connectable, e.g. electrically connectable, to the transmission device 6, e.g. to supply the transmission device 6 with electrical energy for transmitting data and/or receiving data. For example, the apparatus 2 may be configured such that, when the apparatus 2 is operated, the transmission device 6 is supplied with electrical energy by the storage device 4.

The apparatus 2 comprises a communication interface 5. The communication interface 5 may be configured to connect, e.g. electrically connect, the storage device 4 with the transmission device 6. For example, the communication interface 5 may comprise an active configuration. In the active configuration, the communication interface 5 is configured to connect the storage device 4 with the transmission device 6. When the storage device 4 is connected with the transmission device 6, the storage device 4 is configured to supply the transmission device 6 with electrical energy. When the transmission device 6 receives electrical energy, the transmission device 6 is configured to transmit data and/or receive data. The communication device 5 may comprise an inactive configuration. In the inactive configuration, the communication interface 5 is configured to disconnect the storage device 4 from the transmission device 6. This may terminate the transmission and/or reception of data. The active configuration of the communication interface may also be referred to as an "on" configuration or "on" state. The inactive configuration may also be referred to as an "off" configuration or "off" state. It will be appreciated that in other embodiments, the apparatus may comprise another device, switch and/or circuit to connect the storage device with the transmission device.

The apparatus 2 comprises a control device 8 configured to control and/or carry out one or more operations of the apparatus 2. The control device 8 may be provided in the form of a microcontroller, a microcontroller unit, a system on a chip or the like. For example, the control device 8 may comprise a processing device 8a, such as a processor or another processing device. The processing device 8a may comprise one or more central processing units (CPU). In some embodiment, the processing device 8a may additionally or alternatively comprise one or more graphical processing units (GPU) and/or one or more digital signal processors (DSP). It will be appreciated that in other embodiments, the processing device may be implemented as one or more ASICs (application specific integrated circuits) or FPGAs (field programmable gate arrays).

The control device 8 may also include a non-transitory computer-readable storage medium 8b, such as a volatile memory, e.g. random access memory (RAM), non-volatile memory, e.g. read-only memory (ROM) and/or electrically-erasable programmable ROM (EEPROM), and/or other hardware devices or components. The storage medium 8b is configured to store one or more instructions, which when carried out by the control device 8, e.g. the processing device 8a, cause the apparatus 2 to perform a method of operating the apparatus 2, which will be described below.

The apparatus 2 comprises a temperature sensor 10. The temperature sensor 10 is configured to perform one or more temperature measurements The temperature sensor 10 may be provided in the form of a platinum (Pt) temperature sensor, an NTC (negative temperature coefficient) thermistor, a frequency based temperature sensor, MCU (microcontroller unit) temperature sensor or any other suitable temperature sensor.

The control device 8 is configured to determine a temperature at the storage device 4. For example, the control device 8 is configured to determine the temperature at the storage device 4 based on the temperature measured by the temperature sensor 10. The temperature measured by the temperature sensor 10 may be different from the temperature at the storage device 4. The control device 8 may be configured to apply a correction factor to the temperature measured by the temperature sensor 10 to determine the temperature at the storage device 4. For example, the temperature sensor 10 may measure a temperature of 10°C, but an actual temperature at the storage device 4 may be 8°C. As such, the control device 8 may apply a correction factor of -2°C to the temperature measured by the temperature sensor 10, so that the determined temperature at the storage device 4 corresponds to 8°C. The correction factor may dependent on a location of the temperature sensor 10 relative to the storage device 4. The correction factor may be determined prior to and/or during installation of the apparatus 2. For example, the temperature at the storage device 4 may be measured and compared to a temperature measured by the temperature sensor 10. The correction factor may be determined based on the measured temperature at the storage device 4 and the temperature measured by the temperature sensor 10. In the following the description, the temperature at the storage device 4, which is determined by the control device 8, is referred to as an internal temperature of the apparatus 2. The terms "internal temperature of the apparatus" may be considered as encompassing the temperature at the storage device 4. The terms "internal temperature of the apparatus" may additionally be considered as encompassing the temperature in proximity or close to the storage device 4 or another device of the apparatus 2. It will be appreciated that method and/or apparatus 2 described herein is not limited to the exemplary values of the correction factor, the temperature measured by the temperature sensor 10 and the temperature at the storage device 4.

In this embodiment, the control device 8 comprises the temperature sensor 10. For example, the temperature sensor 10 is part of or integrated in the control apparatus 8. The temperature sensor 10 is configured to measure a temperature in an interior of the apparatus 2.

Figure 2A schematically shows another exemplary metering apparatus 2. Any features described above in relation to the apparatus 2 shown in Figure 1 may also apply to the apparatus 2 shown in Figure 2A. Only differences will be described in the following. In this embodiment, the temperature sensor 10 is provided separately from the control device 8. In this embodiment, the temperature sensor 10 is arranged on the same circuit board, e.g. printed circuit board, as the control device 8.

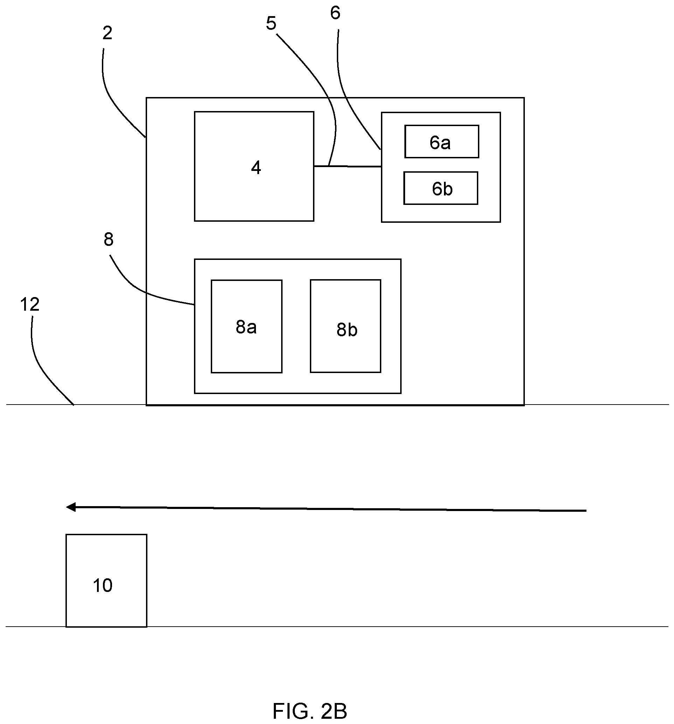

Figure 2B schematically shows another exemplary metering apparatus 2. The apparatus 2 comprises the temperature sensor 10. Any features described above in relation to the apparatus 2 shown in Figures 1 and 2A may also apply to the apparatus 2 shown in Figure 2B. Only differences will be described in the following. In this embodiment, the temperature sensor 10 is provided remotely from the control device 8. In this embodiment, the temperature sensor 10 is arranged in a pipe 12 through which the resource flows. The flow of the resource in the pipe 12 is indicated by the arrow in Figure 2B. In this embodiment, the resource comprises a fluid, such as a liquid, a gas or the like. The control device 8 is configured to determine the internal temperature based on a temperature of the resource, e.g. fluid, that flows through the pipe 12. It will be appreciated that in other embodiments, the temperature sensor may be provided in a different location than that shown in any one of Figures 1 to 2B.

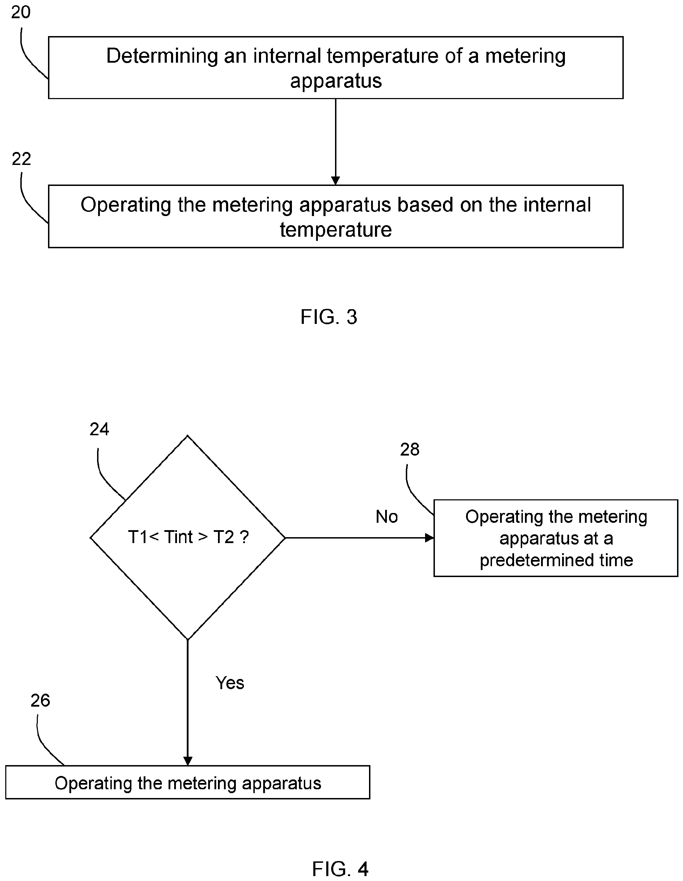

Figure 3 is a flow chart illustrating in overview a method of operating the apparatus 2 according to an embodiment of the present disclosure. In this embodiment, the control device 8 is configured to perform the method of operating the apparatus 2.

At stage 20, the method comprises determining an internal temperature of the apparatus 2. As described above, the internal temperature of the apparatus 2 may be determined based on the one or more temperature measurements performed by the temperature sensor 10. Additionally, the internal temperature of the apparatus 2 may be determined based on the correction factor, as described above. At stage 22, the method comprises operating the apparatus 2 based on the internal temperature. For example, the method may comprise operating the apparatus in dependence on the internal temperature of the apparatus 2. Operating the apparatus 2 may comprise transmitting data and/or receiving data, e.g. to and/or from the other apparatus. The control device 8 is configured to operate the communication interface 5 between the active and inactive configurations. Operating the apparatus 2 may comprise operating the communication interface 5 in the active configuration, e.g. for a time duration. The time duration may be a transmission interval. The transmission interval may also be referred to as a transmission time window. The transmission interval may depend on one or more of the following: one or more properties of one or more electrical components, such as one or more capacitors or buffer capacitors, of the transmission device 6, an expected power consumption of the transmission device 6, a size of the data, and/or an expected data transmission duration. For example, the transmission interval may depend on a capacitance of the buffer capacitors and a product of the expected power consumption of the transmission device 6 and the expected data transmission duration. For example, the transmission interval may be between about 100ms and 3s, such as between about 500ms and 1s. In the transmission interval, the control device 8 is configured to operate the communication interface 5 in the active configuration, e.g. such that data is transmitted and/or received by the transmission to device 6. The expected data transmission may be considered as a duration that is expected for transmitting the data and/or receiving the data.

Figure 4 is a flow chart illustrating in overview one or more further steps that may be part of the method of operating the apparatus 2 illustrated in Figure 3.

Operating the apparatus 2 may comprise operating the metering apparatus based on a comparison of the internal temperature with at least one or both of a first threshold T1 and a second threshold T2. For example, at stage 24, the method comprises determining whether the determined internal temperature Tint of the apparatus 2 is above the first threshold T1 and below the second threshold T2. In response to determining that the determined internal temperature Tint of the apparatus 2 is above the first threshold T1 and below the second threshold T2, the method comprises operating the apparatus 2 at stage 26. Above the first threshold T1, the storage device 4 may supply the transmission device 6 with sufficient electrical energy for transmitting data and/or receiving data. Below the second threshold, a power consumption of the apparatus 2, e.g. the transmission device 6, may be lower than a power consumption of the apparatus 2, e.g. the transmission device 6, at an internal temperature above the second threshold T2. Additionally, below the second threshold T2, a discharge of the storage device 4 may be lower than a discharge of the storage device 4 at an internal temperature above the second threshold T2. As such, by operating the apparatus 2, in response to determining that the determined internal temperature Tint of the apparatus 2 is above the first threshold T1 and below the second threshold T2, a service-life or duration of use of the apparatus 2, e.g. the storage device 4, may be increased and/or an operation of the apparatus 2 may be improved. The terms "first threshold" may be interchangeably used with the terms "first temperature threshold". The terms "second threshold" may be interchangeably used with the terms "second temperature threshold".

Alternatively, in response to determining that the internal temperature Tint is below the first threshold T1 or above the second threshold T2, the method comprises operating the apparatus 2 at a predetermined time, e.g. a predetermined point in time, at stage 28. This may ensure that data is transmitted from and/or received by the apparatus 2. The predetermined time, the predetermined point in time, may be a point in time in an operational time window of the apparatus 2. For example, the predetermined time, e.g. the predetermined point in time, may be at the end of the operational time window. The operational time window may be understood as a time duration during which operation of the apparatus 2 may be planned. It will be appreciated that in the context of this description, the operation of the apparatus 2 may be understood as relating to the transmission and/or reception of data by the apparatus 2. However, the apparatus 2 may be additionally constantly or periodically operated, e.g. to meter the resource.

The operational time window may be pre-determined, e.g. based on one or more points in time, when transmission of data and/or reception of data by the apparatus 2 may be necessary or planned. The apparatus 2 may comprise at least one operational time window, e.g. in a 24 hour period. For example, the operational time window may be between 6am and 8pm. However, it will be appreciated that in other embodiments, there may be one or more operational time windows in a selected time period. The operational time window may comprise one or more transmission intervals. A number of the one or more transmission intervals in an operational time window may be dependent on the internal temperature or a profile of the internal temperature, which will be described below in more detail. Stages 24 to 28 illustrated in Figure 4 may be part of or comprised in stage 22 illustrated in Figure 3. Stages 24 to 28 may be performed in the operational time window.

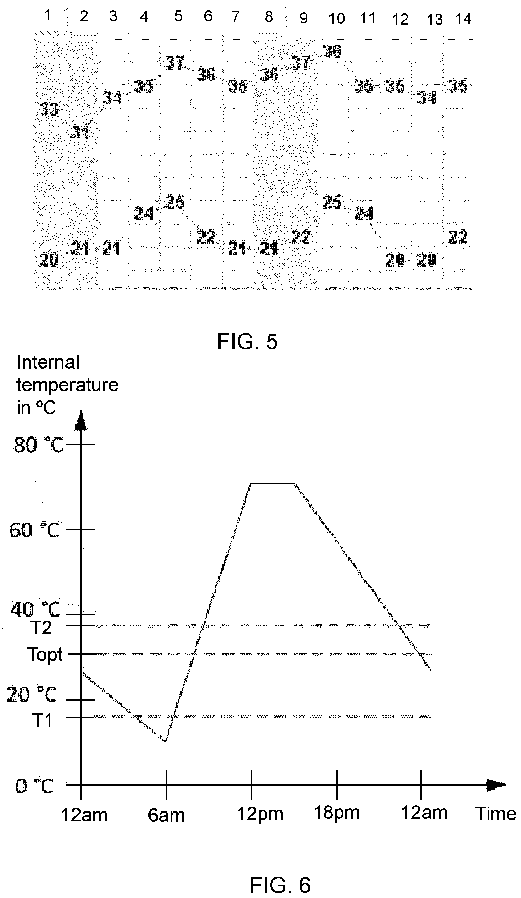

Figure 5 shows an exemplary overview of highest temperatures and early morning temperatures in Alice Springs, Australia, in early spring over 14 days. These temperatures are indicative of the air temperature in the shade. It can be seen from Figure 5 that the highest temperatures vary between 31°C and 38°C over the 14 days. The early morning temperatures vary between 20°C and 25°C over the 14 days. The temperatures shown in Figure 5 may be understood as exemplary ambient temperatures of a metering apparatus, such as apparatus 2.

Figure 6 shows a graph of an internal temperature of a metering apparatus, such as apparatus 2, over time. In the example, the internal temperature of the apparatus 2 has been determined over a 24 hour period. In this example, the apparatus is installed outdoors in Alice Spring, Australia. The graph shown in Figure 6 may define a profile of the internal temperature of the apparatus 2. It can be seen that a minimum internal temperature of about 10 °C was determined at about 6am. From 6am onwards, there is a steep increase of the internal temperature of the apparatus 2 to about 70 °C at 12pm due to sun exposure of the apparatus 2. The internal temperature remains about 70 °C until 6pm. After 6pm, the internal temperature decreases to about 25°C at 12am.

The first threshold T1 and the second threshold T2, as described above, are also indicated in Figure 6. The first threshold T1 may be between 10°C and 20°C. In this embodiment, the first threshold T1 is about 15°C. The second threshold T2 may be between 30°C and 40°C. In this embodiment, the second threshold T2 is about 35°C. It will be appreciated that the first and/or second thresholds are not limited to the exemplary temperatures described herein. In other embodiments, the first threshold and/or the second threshold may be different from the temperatures described herein.

Figure 6 also indicates an optimal temperature Topt. This temperature may be considered as the optimal temperature for operating the apparatus 2. For example, the optimal temperature may be understood as an internal temperature of the apparatus 2 at which the power or current consumption of the apparatus 2, the storage device 4 discharge and/or the amount of electrical energy supplied by the storage device 4 may lead to an increased and/or optimal a service-life or duration of use and/or performance of the apparatus 2. As such, by operating the apparatus 2 at or about the optimal temperature, a service-life or duration of use of the apparatus 2 and/or performance of the apparatus 2 may be increased.

The optimal temperature Topt is above the first threshold T1 and below the second threshold T2. For example, the optimal temperature Topt may be between about 15°C and 35°C. In this embodiment, the optimal temperature Topt is about 30°C. However, it will be appreciated that in other embodiments, the optimal temperature may be different, e.g. larger or smaller than 30°C.

The optimal temperature may be based on a type of the storage device 4, e.g. the battery, and/or an installation location. For example, the optimal temperature may be based on one or more expected temperatures at the installation location. The optimal temperature may be set during the manufacture of the apparatus 2. Additionally or alternatively, the optimal temperature may be set and/or adjusted after manufacture of the apparatus 2. For example, the optimal temperature may be set and/or adjusted during installation of the apparatus 2, subsequent to installation of the apparatus 2 or any other time.

It can be seen from Figures 5 and 6 that the internal temperature of the apparatus 2 may be different from the ambient temperature of the apparatus 2. At one or more points in a day, the internal temperature of the apparatus may be increased relative to the ambient temperature of the apparatus 2. For example, between about 8am and 11pm in Figure 6, the internal temperature is above the ambient temperatures shown in Figure 5. This may be due to sun exposure of the apparatus 2. One or more properties of the apparatus 2 may depend on the internal temperature. For example, the one or more properties of the apparatus 2 may comprise a power or current consumption of the apparatus 2, a storage device 4 discharge and/or an amount of electrical energy supplied by the storage device 4 to the transmission device 6. A high internal temperature of the apparatus 2 may lead to an increased power or current consumption of the apparatus 2 and/or an increased discharge of the storage device 4. A low internal temperature of the metering apparatus may impact a performance of the storage device. For example, at a low internal temperature of the metering apparatus, the supply of electrical energy of the storage device may be insufficient for the operation of the apparatus 2, e.g. the transmission device 6. For example, it can be seen in Figure 6 that a minimum of the internal temperature occurs at about 6am. Additionally or alternatively, the operation of the apparatus 2 may require a high amount of electrical energy to be supplied by the storage device 4 to the transmission device 6. By operating the apparatus based on the internal temperature and/or based on the comparison of the internal temperature with the first and second thresholds T1, T2, the operation of the apparatus 2 may be performed at an internal temperature, which may be optimal for the storage device 4 and/or at which a power or current consumption of the apparatus 2 may reduced. This in turn may result in an increased service-life or duration of use of the apparatus 2.

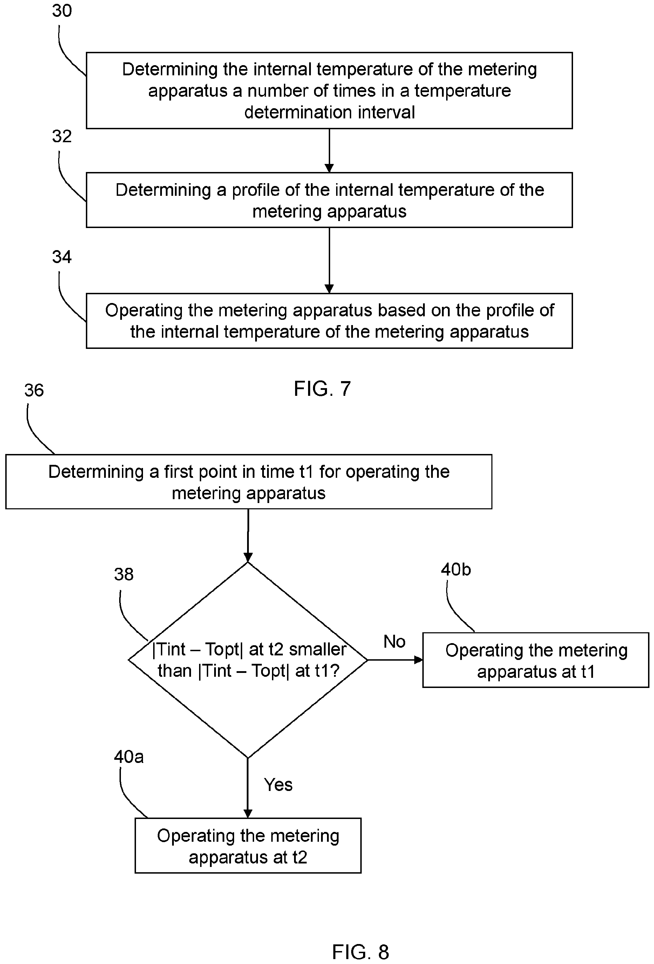

Figure 7 is a flow chart illustrating in overview one or more further steps that may be part of the method of operating the apparatus 2 illustrated in Figure 3 or 4.

At stage 30, the method comprises determining the internal temperature of the apparatus 2 a number of times in a temperature determination interval. For example, a number of internal temperatures may be determined in the temperature determination interval. The temperature determination interval may be different from, e.g. longer or shorter than, or comprise a same length as the operational time window.

The method may comprise determining the internal temperature n times in a temperature determination interval i. In this embodiment, the temperature determination interval i is 24 hours. However, it will be appreciated that in other embodiments, the temperature determination interval may be more or less than 24 hours. For example, in other embodiments, the temperature determination interval may be 12 hours, 36 hours, 48 hours or another suitable temperature determination interval.

The method comprises determining the internal temperature in regular intervals in the temperature determination interval i. For example, each regular interval may be 30 minutes, 1 hour, 2 hours or the like. The method may comprise determining the internal temperature one or more times in each regular interval. For example, the method may comprise determining the internal temperature one or more times every hour.

In some embodiments, the method comprises determining the internal temperature of the apparatus 2 a number of times in each of a plurality of temperature determination intervals. The plurality of temperature determination intervals comprises a plurality of successive temperature determination intervals i.

At stage 32, the method comprises determining a profile of the internal temperature of the apparatus 2 based on the number of internal temperatures determined in the temperature determination interval. As described above, Figure 6 illustrates an exemplary profile of the internal temperature of the apparatus 2.

In embodiments where the internal temperature of the apparatus 2 is determined a number of times in each of the plurality of temperature determination intervals, the method comprises determining the profile of the internal temperature of the apparatus 2 based on the internal temperatures determined in each of the plurality of predetermined time intervals. For example, the profile of the internal temperature of the apparatus 2 comprises a plurality of internal temperatures. Each of the plurality of internal temperatures is based on a plurality of internal temperature values that were determined at a same time in respective temperature determination intervals. Each of the plurality of internal temperatures is a result of a function applied to the plurality of internal temperature values. The function may comprise an averaging function, such as a moving average function, a weighted moving average function, an exponential moving average function, e.g. with a suitable forget factor, or any other suitable function. For example, the temperature determination interval may be 24 hours. The internal temperature of the apparatus 2 may be determined every hour in the temperature determination interval. The internal temperature of the profile of the internal temperature of the apparatus 2 at 2pm may be an average of the internal temperature values determined at 2pm in the last 5 days, e.g. the last 5 temperature determination intervals.

At stage 34, the method comprise operating the apparatus 2 based on the profile of the internal temperature of the apparatus 2. This step may be performed subsequent to the temperature determination interval. For example, the apparatus 2 may be operated in an operational time window that occurs after the temperature determination interval. The profile of the internal temperature may be considered as a last determined profile of the internal temperature.

By operating the apparatus 2 based on the profile of the internal temperature of the apparatus 2, the operation of the apparatus 2 may be performed at one or more internal temperatures, which may be optimal for the storage device 4 and/or at which a power or current consumption of the apparatus 2 may be reduced. This in turn may result in an increased service-life or duration of use of the apparatus 2.

The method comprises determining a point in time in the operational time window at which an internal temperature of the apparatus 2 is above the first threshold T1 and below the second threshold T2, based on profile of the internal temperature of the apparatus 2. In response to a determination of a point in time in the operational time window at which the internal temperature of the apparatus 2 is above the first threshold T1 and below the second threshold T2, the method comprises operating the apparatus 2 at the determined point in time in the operational time window.

In response to a determination that at no point in time in the operational time window, the internal temperature of the apparatus 2 is above the first threshold T1 and below the second threshold T2, the method comprises determining a point in time in the operational time window at which a difference, e.g. an absolute difference, between an internal temperature of the apparatus 2 and the first threshold T1 or the second threshold T2 is minimal or the smallest. For example, when the internal temperature of the apparatus 2 is below the first threshold T1 or above the second threshold T2, the method comprises determining the point in time in the operational time window at which the difference between the internal temperature of the apparatus 2 and the first threshold T1 or the second threshold T2 is minimal or the smallest. The point in time in the operational window is determined based on the profile of the internal temperature of the apparatus 2. The method further comprises operating the metering apparatus at the determined point in time in the operational time window.

Additionally or alternatively, the method may comprise operating the apparatus 2 based on a comparison of the internal temperature with the optimal temperature. For example, the method may comprise determining a point in time in the operational time window at which a difference, such as an absolute difference, between the internal temperature of the apparatus 2 and the optimal temperature is minimal, e.g. based on the profile of the internal temperature of the apparatus 2. The method further comprises operating the metering apparatus at the determined point in time in the operational time window.

Figure 8 is a flow chart illustrating in overview one or more further steps that may be part of the one or more further steps illustrated in Figure 7.

At stage 36, the method comprises determining a first point in time t1 in the operational time window for operating the metering apparatus 2. For example, the first point in time t1 may be at a beginning or start of the operational time window of the apparatus 2. The operational time window may be a current operational time window.

At stage 38, the method comprises operating the apparatus 2 based on a comparison of the internal temperature Tint with the optimal temperature Topt. For example, the method comprise determining whether a difference, such as an absolute difference, between an internal temperature value Tint and the optimal temperature Topt is smaller at a second point in time t2 relative to a difference, such as an absolute difference, between an internal temperature value Tint and the optimal temperature Topt at the first point in time t1. The second point in time t2 is a point in time in the operational time window.

The method may comprise determining the internal temperature Tint based on the profile of the internal temperature of the apparatus 2 at a plurality of points in time in the operational time window. The plurality of points of time comprise the second point in time t2. The second point in time t2 may occur after the first point in time t1. The method may comprise determining a difference, such as the absolute difference, between an internal temperature of the apparatus 2 and the optimal temperature Topt at each of the plurality of points in time in the operational time window.

In response to determining that the difference between the internal temperature value Tint and the optimal temperature Topt is smaller at the second point in time t2, the method comprises operating the apparatus 2 at the second point in time t2 at stage 40a. This may include waiting until the second point in time t2.

Alternatively, in response to determining that the difference between the internal temperature Tint and the optimal temperature Topt is larger at the second point in time t2, the method comprises operating the apparatus at the first point in time t1. This may allow for the apparatus 2 to be operated at a point in time, when the internal temperature is equal to or close to the optimal temperature.

For example, referring to Figure 6 and assuming that the operational time window is between 6am and 12 am. The first point in time t1 may be determined as 6am. At 6am, based on the profile of the internal temperature illustrated in Figure 6, the internal temperature Tint is about 10°C. In this example, the optimal temperature Topt is about 30°C. As such, an absolute difference between the internal temperature Tint and the optimal temperature Topt is about 20°C at the first point in time t1.

The second point in time t2 may be determined as about 7:30am. At 7:30m, based on the profile of the internal temperature illustrated in Figure 6, the internal temperature Tint is about 30°C. As such, an absolute difference between the internal temperature Tint and the optimal temperature Topt is about 0°C at the second point in time t2 and the apparatus 2 is operated at the second point in time t2. Stages 36, 38, 40a and/or 40b may allow for transmission of data to occur at a point in time that is optimal for the performance of the apparatus 2 and/or the storage device 4.

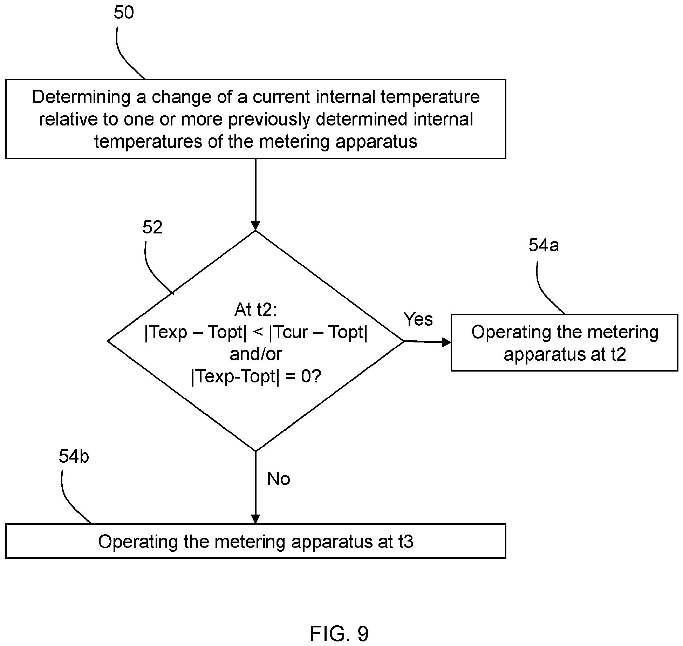

Figure 9 is a flow chart illustrating in overview one or more further steps that may be part of the method of operating the apparatus 2 illustrated in Figure 3, 4, 7 or 8.

The method may comprise operating the apparatus 2 based on a change of the internal temperature Tint, e.g. relative one or more previously determined internal temperatures of the apparatus 2. The internal temperature of the apparatus 2 mentioned above may be a current internal temperature Tcur. For example, the current internal temperature may be determined at a first point in time t1. At stage 50, the method comprises determining a change of the current internal temperature relative to one or more previously determined internal temperatures of the metering apparatus. Stage 50 may be performed in response to determining that the current internal temperature of the metering apparatus is above the first threshold and below the second threshold. The term "change" may be considered as encompassing the term "deviation" or "variation".

At stage 52, the method comprises determining whether a difference, such as an absolute difference, between an internal temperature Texp expected at a later point in time and an optimal temperature Topt decreases or is decreased relative to a difference between the current internal temperature Tcur and the optimal temperature, e.g. based on the change of the current internal temperature. The later point in time may be part of or in the operational time window. Additionally or alternatively, the method comprises determining whether the difference, e.g. the absolute difference, between the internal temperature Texp expected at the later point in time, e.g. in the operational time window, and the optimal temperature Topt equals zero, e.g. based on the change of the current internal temperature. The later point in time may be considered as a second point in time t2. The second point in time t2 occurs after the first point in time t1.

At stage 54a, the method comprises operating the apparatus 2 at the later point in time, in response to a determination that the difference between the internal temperature Texp expected at the later point in time, e.g. in the operational time window, and the optimal temperature decreases or is decreased relative to the difference between the current internal temperature and the optimal temperature and/or that the difference between the internal temperature expected at the later point in time, e.g. in the operational time window, and the optimal temperature equals or becomes zero. For example, it may be detected that there is a trend, which indicates that the difference, e.g. absolute difference, between the expected internal temperature and the optimal temperature decreases or is decreased, e.g. to zero or close to zero, with increasing time in the operational time window. The method includes waiting with the operation of the apparatus 2 until the later point in time, e.g. where the internal temperature is expected to be close or equal to the optimal temperature Topt.

At stage 54b, in response to a determination that the difference between the internal temperature expected at the later point in time, e.g. in the operational time window, and the optimal temperature increases or is increased relative to the difference between the current internal temperature and the optimal temperature, the method comprises operating the apparatus 2 at a point in time before an expected internal temperature Texp of the apparatus 2 exceeds the second threshold T2, the expected internal temperature Texp of the apparatus 2 decreases below the first threshold T1, and/or a difference between the expected internal temperature Texp and the optimal temperature Topt increases or is increased. For example, the method may comprise operating the apparatus 2 at a point in time in the operational window before any of the expected internal temperature Texp of the apparatus 2 exceeds the second threshold T2, the expected internal temperature Texp of the apparatus 2 decreases below the first threshold T1, and/or the difference between the expected internal temperature Texp and the optimal temperature Topt increases. This may ensure that the apparatus 2 is operated while the internal temperature is above the first threshold T1, below the second threshold T2 and/or close to the optimal temperature Topt. The point in time before the expected internal temperature Texp of the apparatus 2 exceeds the second threshold, the expected internal temperature Texp of the apparatus 2 decreases below the first threshold, and/or the difference between the expected internal temperature Texp and the optimal temperature Topt increases may also be referred to as a third point in time t3. The third point in time t3 may occur before the second point in time 2 and after the first point in time t1. One or more of stages 50 to 54b may be performed in the operational time window.

The term difference as used herein may be considered as encompassing the term "distance" and/or the terms "absolute difference". These terms may be interchangeably used.

It will be understood that references to a plurality of features may be interchangeably used with references to singular forms of those features, such as for example "at least one" and/or "each". Singular forms of a feature, such as for example "at least one" or "each," may be used interchangeably.

Although the disclosure has been described in terms of particular embodiments as set forth above, it should be understood that these embodiments are illustrative only and that the claims are not limited to those embodiments. Those skilled in the art will be able to make modifications and alternatives in view of the disclosure, which are contemplated as falling within the scope of the appended claims. Each feature disclosed or illustrated in the present specification may be incorporated in any embodiments, whether alone or in any appropriate combination with any other feature disclosed or illustrated herein.

## Claims

1. A method of operating a metering apparatus, the method comprising:
determining an internal temperature of the metering apparatus; and
operating the metering apparatus based on the internal temperature.

2. The method of claim 1, wherein operating the metering apparatus based on the internal temperature comprises at least one of:
operating the metering apparatus based on a comparison of the internal temperature with at least one of a first threshold and a second threshold;
operating the metering apparatus based on a comparison of the internal temperature with an optimal temperature;
operating the metering apparatus based on a profile of the internal temperature; and/or
operating the metering apparatus based on a change of the internal temperature.

3. The method of claim 2 comprising:
determining whether the internal temperature of the metering apparatus is above the first threshold and below the second threshold; and
in response to determining that the internal temperature of the metering apparatus is above the first threshold and below the second threshold, operating the metering apparatus; or
in response to determining that the internal temperature is below the first threshold or above the second threshold, operating the metering apparatus at a predetermined time.

4. The method of claim 2 or 3, wherein the internal temperature of the metering apparatus is a current internal temperature, the method comprises determining the change of the current internal temperature relative to one or more previously determined internal temperatures of the metering apparatus, in response to determining that the current internal temperature of the metering apparatus is above the first threshold and below the second threshold.

5. The method of claim 4 comprising:
based on the change of the current internal temperature, determining whether a difference between an internal temperature expected at a later point in time and an optimal temperature decreases relative to a difference between the current internal temperature and the optimal temperature and/or whether the difference between the internal temperature expected at the later point in time and the optimal temperature becomes zero,
in response to a determination that the difference between the internal temperature expected at the later point in time and the optimal temperature decreases relative to the difference between the current internal temperature and the optimal temperature and/or that the difference between the internal temperature expected at the later point in time and the optimal temperature equals zero, operating the metering apparatus at the later point in time.

6. The method of claim 5, wherein in response to a determination that the difference between the internal temperature expected at the later point in time and the optimal temperature increases relative to the difference between the current internal temperature and the optimal temperature, the method comprises operating the metering apparatus at a point in time before:
an expected internal temperature of the metering apparatus exceeds the second threshold,
the expected internal temperature of the metering apparatus decreases below the first threshold, and/or
the difference between the expected internal temperature and the optimal temperature increases.

7. The method of any one of claims 2 to 6 comprising:
determining the internal temperature of the metering apparatus a number of times in a temperature determination interval; and
determining the profile of the internal temperature of the metering apparatus based on a number of internal temperatures determined in the temperature determination interval.

8. The method of any one of claims 2 to 7 comprising:
determining the internal temperature of the metering apparatus a number of times in each of a plurality of temperature determination intervals; and
determining the profile of the internal temperature of the metering apparatus based on the internal temperatures determined in each of the plurality of temperature determination intervals.

9. The method of claim 8, wherein the profile of the internal temperature of the metering apparatus comprises a plurality of internal temperatures, each of the plurality of internal temperatures being based on a plurality of internal temperature values that were determined at a same time in respective temperature determination intervals of the plurality of temperature determination intervals.

10. The method of claim 9, wherein each of the plurality of internal temperatures is a result of a function applied to the plurality of internal temperature values.

11. The method of any one of claims 2 to 10, wherein operating the metering apparatus based on the profile of the internal temperature of the metering apparatus comprises:
determining a point in time in an operational time window of the metering apparatus at which an internal temperature of the metering apparatus is above the first threshold and below the second threshold, based on the profile of the internal temperature of the metering apparatus;
in response to a determination of a point in time in the operational time window at which the internal temperature of the metering apparatus is above the first threshold and below the second threshold, operating the metering apparatus at the determined point in time in the operational time window;
in response to a determination that at no point in time in the operational time window the internal temperature of the metering apparatus is above the first threshold and below the second threshold, determining a point in time in the operational time window at which a difference between an internal temperature of the metering apparatus and the first threshold or the second threshold is minimal, based on the profile of the internal temperature of the metering apparatus, and operating the metering apparatus at the determined point in time in the operational time window.

12. The method of any one of claims 2 to 11 comprising:
determining a first point in time for operating the metering apparatus, the first point in time being in an operational time window of the metering apparatus;
based on the profile of the internal temperature of the metering apparatus, determining whether a difference between an internal temperature and the optimal temperature is smaller at a second point in time in the operational time window relative to a difference between an internal temperature and an optimal temperature at the first point in time; and
in response to determining that the difference between the internal temperature and the optimal temperature is smaller at the second point in time, operating the metering apparatus at the second point in time, or
in response to determining that the difference between the internal temperature and the optimal temperature is larger at the second point in time, operating the metering apparatus at the first point in time.

13. The method of any preceding claim, wherein operating the metering apparatus comprises transmitting data and/or receiving data.

14. A metering apparatus comprising:
a control device configured to perform the method of any preceding claim.

15. The metering apparatus of claim 14 comprising:
a temperature sensor configured to perform one or more temperature measurements, wherein the control device is configured to determine the internal temperature of the metering apparatus, based on the one or more temperature measurements performed by the temperature sensor.
